# DEMANDE DE BREVET EUROPEEN

(11) **EP 4 686 603 A1**
(43) Date de publication de la demande: **04.02.2026**
(21) Numéro de dépôt: 25191159.0
(22) Date de dépôt: 23.07.2025
(51) Int. Cl.: B60L 53/67

(54) **SYSTEME ET PROCEDE DE CHARGE DE VEHICULES AUTOMOBILES**

(30) Priorité: 31.07.2024 FR 2408497
(71) Demandeur: Chargepoly, 13593 Aix-en-Provence (FR)
(72) Inventeur: BRUN, Alexandre, Aix-en-Provence (FR); Galliano, Paul, Marseille (FR)
(74) Mandataire: Fidal Innovation

(57) **Abrégé**

Le système de charge comprend :
. deux chargeurs individuels (17) qui fournissent une énergie électrique instantanée de charge d'un véhicule électrique,
. un système de commutation (6) qui raccorde ou non un véhicule électrique au premier et/ou au deuxième chargeur individuel (17),
. un système de commande (8) qui contrôle le système de commutation (6) en interdisant l'ensemble des chargeurs individuels d'être connectés simultanément au même emplacement de charge de véhicule électrique.

## Description

### DOMAINE DE L'INVENTION

La présente invention se rapporte à des systèmes et à des procédés de charge de dispositifs électriques, en particulier de véhicules automobiles chargeables en électricité.

### ARRIERE-PLAN TECHNOLOGIQUE

Plus précisément, l'invention se rapporte à un système de charge de véhicules automobiles.

Depuis une centaine d'années, les véhicules automobiles ont essentiellement été propulsés à une énergie provenant de sources fossiles. Depuis des décennies, le mode de distribution de l'énergie aux véhicules automobiles met en œuvre des stations, auxquelles le réservoir de carburant du véhicule est rempli en quelques secondes. Ces stations permettent une certaine flexibilité, en offrant différents types de carburants provenant de sources fossiles. De plus, les véhicules automobiles étant destinés à se déplacer, il en résulte un maillage territorial fin en stations.

Ces dernières années, de plus en plus de véhicules automobiles nécessitent d'être chargés en une source d'énergie complémentaire, ou alternative, comme par exemple de l'électricité dans le cas de véhicules hybrides énergie fossile / électrique, ou tout électrique. L'autonomie d'un véhicule muni d'un réservoir embarqué d'énergie alternative est généralement plus faible. De plus, le temps de charge d'un tel réservoir est plus long que pour l'énergie fossile. De plus, il existe de nombreux nouveaux systèmes énergétiques, de sorte qu'il devient compliqué de disposer de l'ensemble des services en station. De plus, il y a encore peu de véhicules propulsés aux énergies alternatives, ce qui ne justifie pas que chaque station s'équipe en de nombreux systèmes de charge en énergies alternatives. Il en résulte un changement de paradigme dans le système de la charge énergétique de véhicule automobile. Ce changement de paradigme a conduit à déporter le service de charge depuis les stations traditionnelles vers les lieux de stationnement. Aujourd'hui, la charge énergétique est possible en de nombreux emplacements réservés disposés à proximité immédiate d'une source d'énergie.

Cette solution n'est toutefois pas optimale car, s'ils ne sont pas assez nombreux, les équipements réservés sont tous occupés, ce qui empêche de charger un véhicule automobile. Et, s'ils sont assez nombreux, ils sont souvent inoccupés, mais réservés, ce qui est problématique vis-à-vis des véhicules traditionnels. Cette solution n'est donc pas assez flexible pour respecter le besoin de mobilité des usagers et l'évolution rapide du nombre de véhicules à source d'énergie alternative.

US 2018/254,643 décrit un système de cadencement de la charge de véhicules électriques. Toutefois, ce système reste gourmand en terme d'infrastructure.

Le document FR 3 095 992 décrit un système et un procédé de charge de véhicules électriques comprenant une chaine électrique reliant deux chargeurs électriques, avec une pluralité d'emplacements de charge disposés entre les deux chargeurs électriques le long de la chaine électrique.

Le document WO 2018/192,951 décrit un système de charge de véhicules électriques comprenant trois chargeurs et quatre véhicules électriques interfacés ensemble par une matrice de commutation. Concernant les chargeurs, il est indiqué qu'ils peuvent mettre en œuvre une charge à une tension de sortie de 200-500V à 125 A (Combo-1) ou 50-500 V à 120 A (Chademo) et/ou peuvent répondre aux standards de connexion EN61851-23 / DIN 70121 Combo-1 et/ou Chademo 1.0 DC pour les ports de sortie. Ce système comprend des capteurs de court-circuit adaptés pour détecter des court-circuits qui surviendraient au cas où plusieurs véhicules seraient branchés dans une configuration du circuit qui ne conviendrait pas. Dans ce cas, si un court-circuit est détecté, certains contacts sont ouverts pour se débarrasser du court-circuit.

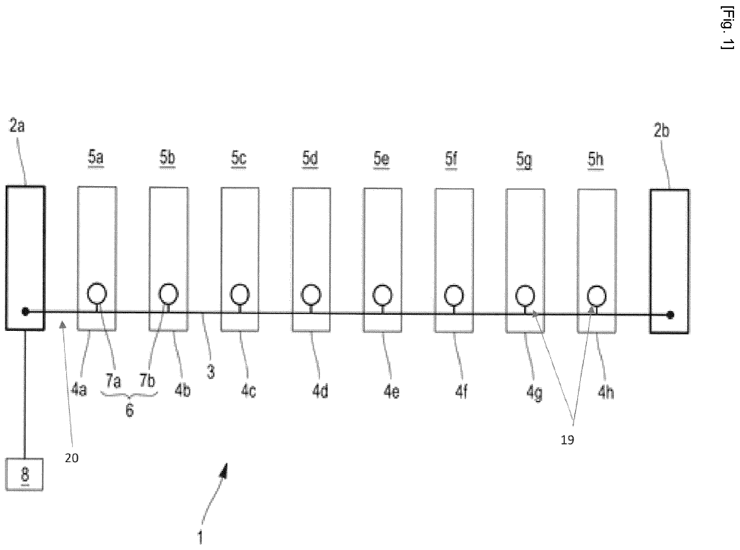

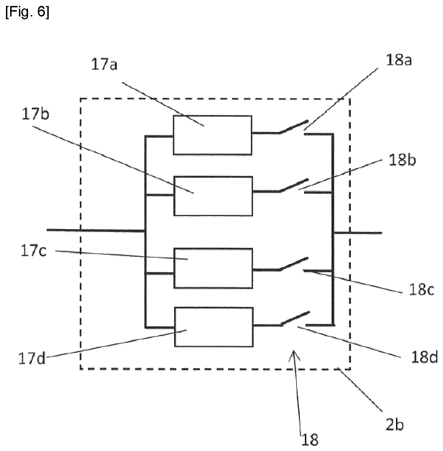

JP 2015/186,391 décrit plusieurs modes de réalisation. Dans le mode de réalisation de la figure 1, le système de charge de véhicules électriques comprend une source d'énergie, un convertisseur contrôlé par un contrôleur en vue d'alimenter électriquement des véhicules électriques. Ce premier mode de réalisation prévoit qu'il est possible de faire commuter les commutateurs en vue de charger électriquement un véhicule à la fois par la source d'énergie et par un autre véhicule. La figure 6 décrit un système de charge de véhicules électriques comprenant une source d'énergie, plusieurs convertisseurs contrôlés par des contrôleurs en vue d'alimenter électriquement des véhicules électriques. Le système comprend également un bloc de commutation aval. Dans ce mode de réalisation, un nouveau véhicule arrivant en n'importe quelle borne de charge se verra attribuer le chargeur présentant la « marge » de puissance électrique la plus importante. Par exemple, un véhicule, bien qu'apparemment branché en face d'un chargeur, peut être raccordé à un autre chargeur par le biais du bloc de commutation. Dans la lignée du premier mode de réalisation, il est indiqué que, dans ce cas, les autres véhicules sont également utilisés pour charger ce véhicule. Selon la configuration présentée, il semble alors impossible de charger simultanément d'autres véhicules. Le mode de réalisation de la Figure 7 est similaire au précédent, si ce n'est que le bloc de commutation est déplacé en amont du dispositif de contrôle de charge.

Le document US 2014/253,034 décrit un système de charge de véhicules électriques comprenant un chargeur dit « rapide » et un chargeur dit « normal ». Comme on peut le voir sur la figure 1 une boîte de commutation permet de raccorder toute borne de charge avec le chargeur rapide. Une autre boîte de commutation permet de raccorder toute borne de charge avec le chargeur normal. Un plan de charge est déterminé pour charger un véhicule nouvellement arrivant en priorité avec le chargeur rapide, puis avec le chargeur normal. Selon le mode de réalisation de la figure 7, l'unité de planification est intégrée dans un véhicule.

Le document EP 3346571 décrit un système dans lequel une matrice de commutation est interposée entre une pluralité de modules DC et des sorties qui correspondent à des emplacements de parking. Le problème que ce document vise à résoudre est que, en cas de maintenance, la position des modules est modifiée. La solution proposée est d'intégrer cette matrice de commutation, qui permet de « flécher » l'énergie distribuée vers le bon emplacement.

Le document US 2013/057,209 prévoit que la puissance délivrée par l'ensemble des chargeurs puisse être additionnée sur n'importe quel point de charge, ce qui est gourmand en terme d'infrastructure.

On connait du DE102021212734A1 une station de charge pour véhicules électriques comprenant plusieurs modules de puissance pouvant être connectés en parallèle à des points de charge, au moyen d'une architecture de commutation.

L'invention vise ainsi à améliorer la disponibilité des systèmes de charge en énergie électrique de véhicules automobiles, et à ajuster au mieux la capacité de charge installée de l'infrastructure de recharge.

### RESUME DE L'INVENTION

Ainsi, l'invention se rapporte à un système de charge en énergie électrique de véhicules électriques comprenant :
. au moins trois chargeurs individuels, chaque chargeur individuel étant adapté pour fournir une énergie électrique instantanée de charge d'un véhicule électrique,
. un système de connexion adapté pour relier les chargeurs individuels à des emplacements de charge de véhicule électrique ;
. un système de commutation adapté pour alternativement raccorder ou non les emplacements de charge de véhicules électriques aux chargeurs individuels,
   le système de commutation pouvant alternativement, pour chaque emplacement :
   - connecter électriquement l'emplacement à un premier seul chargeur individuel,
   - connecter électriquement l'emplacement à un deuxième seul chargeur individuel,
   - déconnecter électriquement l'emplacement de tout chargeur individuel et de tout autre emplacement de charge,
   - connecter électriquement l'emplacement au moins à un premier chargeur individuel et à un deuxième chargeur individuel connectés en parallèle ;
. un module informatisé de réception d'un système de commande adapté pour recevoir des informations de demande en charge électrique des véhicules électriques,
. un processeur d'un système de commande adapté pour déterminer, de manière répétée, une cartographie de raccordements entre les véhicules électriques et les chargeurs individuels, en fonction au moins des informations de demande en charge reçues, la cartographie de raccordement interdisant l'ensemble des chargeurs individuels d'être connectés simultanément au même emplacement,
le système de commande étant adapté pour contrôler de manière répétée le système de commutation pour raccorder électriquement les emplacements de charge des véhicules électriques aux chargeurs individuels.

Grâce à ces dispositions, de nombreux véhicules électriques peuvent être chargés sur un laps de temps donné au moyen d'un nombre inférieur de chargeurs. Les emplacements de stationnement peuvent ne pas être réservés aux seuls véhicules électriques.

Selon différents aspects, il est possible de prévoir l'une et/ou l'autre des dispositions ci-dessous.

Selon une réalisation, le processeur est adapté pour déterminer la cartographie de raccordements à partir d'une et/ou plusieurs informations de demande en charge électrique choisies parmi :
- une information de temps d'arrivée d'un véhicule électrique au système de charge ;
- une information de temps de départ estimé d'un véhicule électrique du système de charge ;
- une information de durée de présence estimée d'un véhicule électrique au système de charge ;
- une information de niveau de charge initial d'un véhicule électrique ;
- une information de niveau de charge final souhaité pour un véhicule électrique ;
- une information de niveau de charge instantané d'un véhicule électrique ;
- un ensemble de paramètres physiques de l'état d'un véhicules électrique tels que la température de la batterie, sa tension électrique.

Selon une réalisation, le processeur est adapté pour déterminer la cartographie de raccordements à partir en outre d'informations choisies parmi :
- une information de temps instantanée fournie par une horloge ;
- une information de disponibilité de la source d'énergie comme le réseau électrique.

Selon une réalisation, lesdites énergies électriques présentent des caractéristiques électriques de charge différentes, et dans lequel le processeur est adapté pour déterminer la cartographie de raccordements en fonction en outre desdites caractéristiques électriques de charge.

Selon une réalisation, les caractéristiques électriques de charge des chargeurs comprennent une puissance électrique instantanée de charge en courant continu.

Selon une réalisation, le processeur est adapté pour déterminer la cartographie de raccordements en minimisant une différence entre la puissance de charge nominale disponible au niveau du système de charge et la puissance de charge consommée, en prenant en compte, en terme de contraintes, la configuration du système de charge, la cartographie de raccordements actuelle et une estimation de la demande en charge future.

Selon une réalisation, le système de charge comprend au moins un premier et un deuxième chargeurs, chaque chargeur comprenant au moins un desdits chargeurs individuels, et au moins un desdits chargeurs étant constitué d'une pluralité de chargeurs individuels connectés entre eux en parallèle, dans lequel le système de commutation comprend :
. un système de commutation de chargeur adapté pour alternativement connecter les uns aux autres ou déconnecter les uns des autres lesdits chargeurs individuels,
. un système de commutation de distribution adapté pour alternativement raccorder ou non les véhicules électriques au premier chargeur ou au deuxième chargeur, ledit système de commutation de distribution comprenant ledit dispositif de commutation,
Et le système de commande est adapté pour contrôler de manière répétée le système de commutation de distribution pour raccorder électriquement un des véhicules électriques au premier chargeur et un autre des véhicules électriques au deuxième chargeur et le système de commutation de chargeur pour raccorder électriquement entre eux des chargeurs individuels.

Selon une réalisation, le système de commutation, notamment le système de commutation de distribution, est configuré pour que chaque chargeur individuel soit raccordé, à tout instant donné, à au plus une borne de charge.

Selon une réalisation, le système de commande est externe à tout véhicule à charger.

Selon une réalisation, au moins un des chargeurs individuels est mobile, le système de commande étant adapté pour contrôler de manière répétée le système de commutation, notamment le système de commutation de distribution pour raccorder électriquement un des dispositifs électriques à un premier chargeur individuel et un autre des dispositifs électriques à un deuxième chargeur individuel en fonction de l'emplacement des chargeurs individuels.

Selon une réalisation, le chargeur individuel mobile se raccorde au système de connexion au niveau d'un emplacement.

Selon une réalisation, le chargeur individuel mobile est un véhicule électrique.

Selon un autre aspect, l'invention se rapporte à un procédé de charge en énergie électrique de dispositifs électriques dans lequel, disposant de :
- au moins trois chargeurs individuels, chaque chargeur individuel étant adapté pour fournir une énergie électrique instantanée de charge d'un véhicule électrique, chaque chargeur comprenant au moins un module chargeur, au moins un desdits chargeurs étant constitué d'une pluralité de modules chargeurs,
   . un système de connexion adapté pour relier les chargeurs individuels à des emplacements de charge de véhicules électriques;
- un système de commutation adapté pour alternativement raccorder ou non les emplacements de charge de véhicules électriques aux chargeurs individuels,
   le système de commutation pouvant alternativement pour chaque emplacement :
   . connecter électriquement l'emplacement à un premier seul chargeur individuel,
   . connecter électriquement l'emplacement à un deuxième seul chargeur individuel,
   . déconnecter électriquement l'emplacement de tout chargeur individuel et de tout autre emplacement de charge ,
   . connecter électriquement l'emplacement au moins à un premier chargeur individuel et à un deuxième chargeur individuel connectés en parallèle ;
- un module informatisé de réception d'un système de commande reçoit des informations de demande en charge électrique des véhicules électriques ;
- un processeur du système de commande détermine, de manière répétée, une cartographie de raccordements entre les véhicules électriques et les chargeurs individuels, en fonction au moins des informations de demande en charge électrique reçues, la cartographie de raccordement interdisant l'ensemble des chargeurs individuels d'être connectés simultanément au même emplacement,
- le système de commande contrôle de manière répétée le système de commutation pour raccorder électriquement les emplacements de charge des véhicules électriques aux chargeurs individuels.

Selon un autre aspect, l'invention se rapporte à un programme d'ordinateur comprenant des instructions qui, lorsque le programme est exécuté par un ordinateur, conduisent celui-ci à mettre en œuvre ce procédé.

### BREVE DESCRIPTION DES DESSINS

Des modes de réalisation de l'invention seront décrits ci-dessous par référence aux dessins, décrits brièvement ci-dessous :
La figure 1 représente schématiquement un système de charge selon un mode de réalisation.
La figure 2 représente schématiquement une borne de charge équipant le système de charge de la figure 1.
La figure 3 est un schéma similaire à la figure 1, illustrant un autre mode de réalisation.
La figure 4 est un schéma similaire à la figure 1, illustrant un autre mode de réalisation.
La figure 5 est un schéma similaire à la figure 1, illustrant un autre mode de réalisation.
La fFigure 6 est un schéma représentatif d'un chargeur selon un exemple de réalisation.

Sur les dessins, des références identiques désignent des objets identiques ou similaires.

### DESCRIPTION DETAILLEE

La figure 1 représente schématiquement un système de charge 1 selon un mode de réalisation. Le système de charge 1 comprend un premier chargeur 2a et un deuxième chargeur 2b. Ici, les chargeurs peuvent être désignés soit par la référence générale « 2 », soit individuellement par la référence « 2 » suivie d'une lettre. Chaque chargeur 2 est relié à une source d'énergie, et est capable, en instantané, d'alimenter en énergie électrique, un véhicule électrique, selon un mode de charge particulier. Dans le présent exemple, pour simplifier, le chargeur électrique 2a met en œuvre un unique mode de charge particulier, à savoir, par exemple, une charge dite « plus rapide » selon les standards publiés et en vigueur à la date de priorité de la présente demande de brevet. Il s'agit par exemple d'une charge en courant continu, de puissance égale ou supérieure à 50 kW, voire 100 kW, voire encore 200 kW, ou même 350 kW. Le chargeur électrique 2b met en œuvre un unique mode de charge particulier, à savoir, par exemple, une charge dite « moins rapide » selon les standards publiés et en vigueur à la date de priorité de la présente demande de brevet. Il s'agit par exemple d'une charge en courant continu, de puissance inférieure à la puissance du chargeur électrique 2a, par exemple au plus égale à 50 kW. Ainsi, les chargeurs électriques 2a et 2b peuvent présenter des caractéristiques électriques de charge différentes, et en particulier une puissance en courant continu différente. La différence de puissance en courant continu entre les deux chargeurs est au moins égale à 5 kW, voire 10 kW, le cas échéant au moins égale à 30 kW, voire au moins égale à 50 kW. Selon une variante de réalisation, les chargeurs électriques 2a et 2b présentent une tension différente. On prévoit par exemple un premier chargeur 2a à une tension égale à 800 V, et un deuxième chargeur 2b à une tension égale à 400 V. Selon les exemples, on prévoit une différence de tension au moins égale à 100 V entre les deux chargeurs. Selon une variante de réalisation, les chargeurs électriques 2a et 2b présentent une intensité différente. On prévoit par exemple un premier chargeur 2a à une intensité égale à 50 A, et un deuxième chargeur 2b à une intensité égale à 63 A. Selon les exemples, on prévoit une différence d'intensité au moins égale à 10 A, notamment au moins égale à 30 A, voire au moins égale à 50 A, entre les deux chargeurs. Plus généralement, la caractéristique électrique considéré peut être l'ensemble des points de fonctionnement admissibles en tension électrique et en courant électrique (plage de fonctionnement sur, désigné par l'acronyme anglais « SOA » pour « Safe Operating Area »), pouvant être produits par le chargeur. Par « différentes », on comprend ici que la différence de caractéristiques électriques des deux chargeurs va au-delà de la dispersion intrinsèque entre des chargeurs électriques prévus pour être identiques. Deux chargeurs présentent par exemple des caractéristiques différentes si un point de fonctionnement donné est admissible pour l'un mais pas pour un autre. La source d'énergie dont est issue l'énergie fournie par le chargeur 2 est par exemple l'un et/ou l'autre du réseau électrique, d'une source d'énergie renouvelable, d'un stockage d'énergie (batterie, pile à combustible avec stockage d'hydrogène, ...). En variante, les deux chargeurs 2a et 2b peuvent être identiques.

Au moins un chargeur 2a ou 2b comprend une pluralité de chargeurs individuels. La figure 6 présente le chargeur 2b à titre d'exemple purement illustratif. Les chargeurs individuels sont désignés en général par la référence générale 17, et chacun par une référence 17 suivie d'une lettre. Chaque chargeur individuel 17 est adapté pour fournir une partie de la puissance électrique délivrée par le chargeur en question. En considérant, à titre d'exemple, que le chargeur 2b comprend une pluralité de chargeurs individuels 17, ce chargeur 2 comprend par exemple deux chargeurs individuels, trois chargeurs individuels, quatre chargeurs individuels, typiquement moins de seize ou huit chargeurs individuels. Les chargeurs individuels 17 d'un chargeur peuvent être identiques les uns aux autres. Les chargeurs individuels 17 d'un chargeur peuvent être différents les uns des autres. En cas de chargeurs individuels 17 différents, ils diffèrent par la puissance électrique que chacun est susceptible de fournir. A titre d'exemple purement illustratif, un chargeur 2 de 100 kW comprend deux chargeurs individuels 17a, 17b de 40 kW chacun, et deux chargeurs individuels 17c et 17d de 10 kW chacun. La puissance maximale susceptible d'être délivrée par le chargeur 2 correspond à la somme des puissances des chargeurs individuels 17. Un chargeur 2 est capable de délivrer une puissance différente de sa puissance maximale, par addition des puissances des chargeurs individuels 17 qui le composent. Ainsi, dans l'exemple présenté, le chargeur 2 peut délivrer une puissance de 10 kW (au moyen d'un unique chargeur individuel 17c ou 17d de 10 kW), de 20 kW (au moyen de deux chargeurs individuels 17c et 17d de 10 kW chacun), de 40 kW (au moyen d'un unique chargeur individuel 17a ou 17b de 40 kW), de 50 kW (au moyen d'un unique chargeur individuel 17a ou 17b de 40 kW et d'un unique chargeur individuel 17c ou 17d de 10 kW), de 60 kW (au moyen d'un unique chargeur individuel 17a ou 17b de 40 kW et des deux chargeurs individuels 17c et 17d de 10 kW), de 80 kW (au moyen des deux chargeurs individuels 17a et 17b de 40 kW), de 90 kW (au moyen des deux chargeurs individuels 17a et 17b de 40 kW et d'un unique chargeur individuel 17c ou 17d de 10 kW), ou de 100 kW (au moyen de l'ensemble des chargeurs individuels). Ainsi, quand un chargeur délivre une puissance dite inférieure à sa puissance maximale, c'est par combinaison d'un nombre réduit des chargeurs individuels dont il est composé. Ainsi, dans ce mode de réalisation, le chargeur 2 comprend également un système de commutation de chargeur 18 adapté pour connecter les chargeurs individuels 17 ensemble de manière à additionner leurs puissances. Selon un exemple de réalisation, le système de commutation de chargeur 18 comprend un dispositif de commutation 18a-18d associé à chaque chargeur individuel 17a-17d respectif, et commandable pour faire en sorte que le chargeur individuel associé participe ou non à la puissance totale délivrée par le chargeur. Dans l'exemple de réalisation, le système de commutation de chargeur 18 est représenté intégré au chargeur 2. Toutefois, en variante, il pourrait être externe.

Par convention, si un chargeur n'est pas divisé en une pluralité de chargeurs individuels additionnables, on appelle « chargeur individuel » le chargeur complet.

Dans cet exemple, les deux chargeurs 2a, 2b, sont distants l'un de l'autre.

Le système de charge 1 comprend un système de connexion électrique 20. Le système de connexion électrique 20 comprend par exemple une chaîne électrique 3 s'étendant d'un des deux chargeurs à l'autre. La chaîne électrique 3 est apte à transporter l'énergie électrique provenant de chaque chargeur 2 à destination de véhicules électriques (non représentés) disposés en des emplacements électriques 5a-5h disposés le long de la chaîne électrique 3 entre les deux chargeurs.

Le système de charge 1 comprend en outre une pluralité de bornes de charge. Ici, les bornes de charge peuvent être désignées soit par la référence générale « 4 », soit individuellement par la référence « 4 » suivie d'une lettre. Dans cet exemple de réalisation, le nombre de bornes de charge 4 est supérieur ou égal au nombre de chargeurs 2. Les différentes bornes de charge 4 sont interposées entre les chargeurs. Plus précisément la disposition dans le mode de réalisation de la figure 1 est la suivante, de gauche à droite : chargeur 2a, puis borne de charge 4a, puis borne de charge 4b, puis borne de charge 4c, ainsi de suite, jusqu'à la borne de charge 4h, et enfin le chargeur 2b.

Les chargeurs 2 et les bornes de charge 4 sont disposés le long de la chaîne électrique 3. Ainsi, par « interposé entre » deux dispositifs, on entend que la borne de charge est entre deux autres dispositifs le long de la chaîne électrique 3.

Chaque borne de charge 4 dessert un emplacement de charge de véhicule électrique. Ici, les emplacements de charge peuvent être désignés soit par la référence générale « 5 », soit individuellement par la référence « 5 » suivie d'une lettre. La lettre désignant l'emplacement de charge est la même que la lettre désignant la borne de charge associée à l'emplacement de charge.

Chaque emplacement de charge 5 est apte à recevoir un véhicule électrique susceptible d'être chargé en énergie électrique par le système de charge 1 par l'intermédiaire de la borne de charge 4 associée.

Le système de charge comprend un système de commutation de distribution 19. Le système de commutation de distribution 19 comprend un ensemble de dispositifs de commutation. Les dispositifs de commutation peuvent être désignés soit par la référence générale « 7 », soit individuellement par la référence « 7 » suivie d'une lettre. Un dispositif de commutation 7 est associé à chaque borne de charge 4. La lettre désignant le dispositif de commutation est la même que la lettre désignant la borne de charge associée au dispositif de commutation.

Chaque dispositif de commutation 7 est électriquement connecté à la borne de charge 4 à laquelle il est associé.

Des dispositifs de commutation 7 sont connectés un à un par une ligne électrique de la chaîne électrique 3. Chaque dispositif de commutation 7, associé et connecté à une borne de charge 4, permet le raccordement au chargeur 2a, au chargeur 2b , ou aux deux chargeurs 2a et 2b via la chaîne électrique 3.

Un dispositif de commutation 7 est adapté pour pouvoir être commuté entre plusieurs configurations. Selon les configurations (pour l'exemple illustratif de la borne de charge 4a) :
- Le commutateur 14a du dispositif de commutation 7 autorise un raccordement électrique de la borne de charge 4a à laquelle il est associé au chargeur 2a auquel il est associé,
- le commutateur 14a du dispositif de commutation 7 ne raccorde la borne de charge 4a à laquelle il est associé à aucun chargeur et isole électriquement la borne 4a des autres bornes de charge.

Selon les configurations (pour l'exemple illustratif de la borne de charge 4a) :
- le commutateur 14b du dispositif de commutation 7 autorise un raccordement électrique de la borne de charge 4a à laquelle il est associé au chargeur 2b auquel il est associé,
- le commutateur 14b du dispositif de commutation 7 ne raccorde la borne de charge 4a à laquelle il est associé à aucun chargeur et isole électriquement la borne 4a des autres bornes de charge.

De plus, le système de commutation de distribution 19 est configuré pour que, si une borne de charge 4 est raccordée à au moins un chargeur 2, les autres bornes de charge ne sont pas raccordées à ce ou ces chargeurs 2.

Il en résulte que, de manière instantanée, un chargeur 2 est raccordé au plus à une unique borne de charge 4. Par « de manière instantanée », on veut ici dire « à un moment donné ». Le système de commutation de distribution 19 permet ainsi une association un à un entre les bornes de charge 4 et un ensemble d'un ou plusieurs chargeurs 2. A un instant donné, pour chaque borne de charge 4, soit elle n'est raccordée à aucun chargeur, soit elle est raccordée à un unique chargeur 2, soit elle est raccordée à plusieurs chargeurs. A un instant donné, pour chaque chargeur 2, soit il n'est raccordé à aucune borne de charge 4, soit il est raccordé à une unique borne de charge 4. Selon une configuration dite « un-à-un », le système de commutation de distribution 19 peut interdire que plusieurs chargeurs soient connectés simultanément à une même borne de charge 4. Selon cette configuration « un-à-un », une borne de charge 4 est raccordée au plus à un unique chargeur 2.

Le système de commutation de chargeur 18 et le système de commutation de distribution 19 forment ensemble le système de commutation 6 du système de charge. Bien que, dans l'exemple présenté, le système de commutation 6 soit présenté comme comprenant un système de commutation de chargeur 18 et un système de commutation de distribution 19 séparés, d'autres implémentations sont possibles.

Le système de charge 1 comprend également un système de commande 8. Le système de commande 8 est par exemple disposé dans un boîtier proche d'un des chargeurs 2, 3, ou dans un serveur distant (non représenté). Le système de commande 8 est externe aux véhicules à charger. Le système de commande 8 est en communication, filaire ou sans fil, avec chacun des dispositifs de commutation 7. Le système de commande 8 est configuré pour commander, de manière répétée, les dispositifs de commutation 7 et les dispositifs de commutation 18 entre leurs configurations.

Le système de commande 8 est cadencé par une horloge, par exemple selon une cadence prédéterminée. La cadence peut par exemple être paramétrée, et modifiée au cours du temps. Selon un exemple de réalisation, la cadence est d'une opération de vérification d'une nécessité de commutation toutes les 5 minutes. On peut par exemple prévoir une opération de vérification d'une nécessité de commutation selon une fréquence comprise entre une fois toutes les dix secondes et une fois toutes les vingt minutes.

Cette détermination n'est pas nécessairement périodique. Par exemple, on peut prévoir qu'une nouvelle opération de vérification de nécessité de commutation est mise en œuvre à la connexion d'un nouveau véhicule ou à la déconnexion, d'un nouveau véhicule.

Au déclenchement d'une opération de vérification d'une nécessité de commutation, le système de commande 8 vérifie la nécessité d'une commutation. Selon le résultat de cette opération, soit le système de commande 8 ne commande aucune commutation, soit le système de commande 8 commande une ou plusieurs commutations des dispositifs de commutation 7 et/ou des dispositifs de commutation 18. Etant donné que chaque dispositif de commutation 7 ou 18 présente plusieurs configurations, on appelle « commutation » la commutation d'un dispositif de commutation 7 ou 18 depuis sa configuration actuelle vers une autre configuration. Comme on le verra ci-dessous, cette commande de commutation peut nécessiter la commutation de plusieurs dispositifs de commutation 7, voire de plusieurs commutateurs individuels faisant partie des dispositifs de commutation 7, et/ou de plusieurs dispositifs de commutation 18.

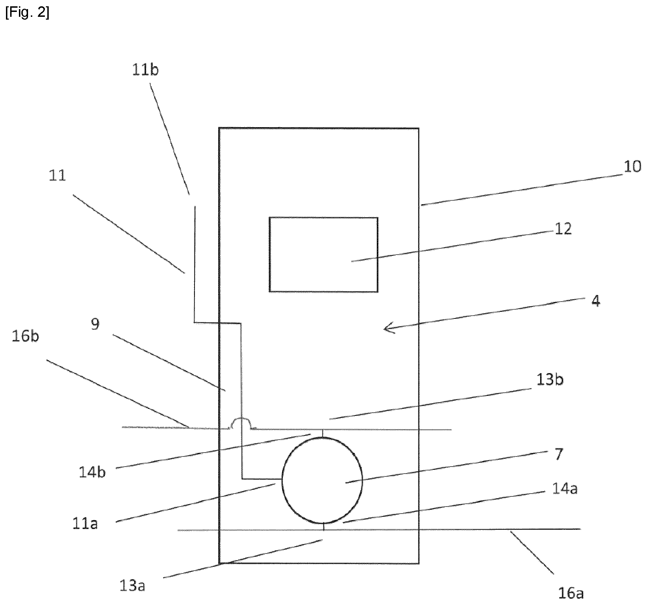

La figure 2 représente schématiquement une borne de charge 4. La borne de charge 4 peut comprendre un support 9 délimité par un boîtier 10, et fixé au sol. Le support 9 reçoit un câble 11 de charge comprenant une première extrémité 11a et une deuxième extrémité 11b opposée. La première extrémité 11a est connectée électriquement au dispositif de commutation 7. La deuxième extrémité 11b comprend une interface de charge adaptée pour être connectée électriquement à une interface de charge complémentaire du véhicule électrique.

Bien que, sur le schéma, le dispositif de commutation 7 soit présenté comme intégré à la borne de charge 4, ce n'est pas nécessairement le cas. Le dispositif de commutation 7 peut être adjacent à la borne de charge.

Comme on le comprendra de la description qui suit, la borne de charge 4 peut comprendre divers composants électroniques. Ceux-ci peuvent être alimentés électriquement par une connexion électrique de la borne de charge 4 au secteur. Cette connexion électrique peut, le cas échéant, se faire par l'intermédiaire de la chaîne électrique 3. En particulier, comme représenté sur la figure 2, la chaîne électrique 3 comprend, en amont de la borne de charge 4, un faisceau électrique qui comprend un ou plusieurs fils qui se raccordent électriquement au dispositif de commutation 7, et un ou plusieurs fils qui se raccordent électriquement aux composants électroniques de la borne de charge 4 (matérialisés, dans l'exemple, par l'interface électronique 12 présentée ci-dessous) pour l'alimentation électrique de ces composants.

La borne de charge 4 peut également comprendre une interface électronique 12 adaptée pour permettre une communication entre le véhicule automobile associé à la borne de charge 4 et le système de charge 1. Plusieurs variantes sont envisageables pour l'interface électronique 12. Selon un exemple, on peut prévoir que l'interface électronique 12 comprend un moyen pour envoyer des informations vers l'utilisateur et/ou des moyens pour recevoir des informations depuis l'utilisateur. Selon les réalisations, on peut par exemple prévoir un système écran et clavier, ou un écran muni d'une dalle tactile, et/ou un système de communication avec un dispositif informatique portatif de l'utilisateur, et/ou avec un dispositif informatique du véhicule, permettant d'échanger des informations via l'interface homme-machine de l'un et/ou l'autre de ces dispositifs informatiques.

Le système de charge 1 comprend un système de communication adapté pour permettre le transfert d'informations entre les différents composants qui en ont besoin. L'interface électronique 12 décrite ci-dessus fait partie de ce système de communication. Le système de communication peut également comprendre un système de communication entre la borne de charge 4 et le système de commande 8. Le système de commande 8 comprend donc un module de réception d'informations. On prévoit par exemple une communication filaire entre la borne de charge 4 et le système de commande 8, pour transmettre des informations entre la borne de charge 4 et le système de commande 8. On peut notamment utiliser la chaîne électrique 3 pour la transmission de ces informations. Celle-ci comprend donc des fils qui permettent le transfert d'informations entre la borne de charge 4 et le système de commande 8, par exemple par l'intermédiaire du chargeur 2a. Les informations en question comprennent par exemple celles saisies, ou une partie de celles récupérées via l'interface électronique 12 de la borne de charge 4. Les informations en question peuvent également comprendre des informations provenant du véhicule (par exemple de la batterie du véhicule), et transmises par le véhicule à la borne de charge 4. Les informations en question peuvent également comprendre un identifiant de la borne de charge 4 à associer aux informations sus-mentionnées.

En variante, le système de communication peut comprendre un système de communication entre le système de commande 8 et l'utilisateur directement. On peut par exemple prévoir un système non-filaire de communication entre le système de commande 8 et le dispositif informatique portatif de l'utilisateur, et/ou avec un dispositif informatique du véhicule.

Selon un exemple, les informations de demande en charge électrique communiquées au système de commande 8 peuvent comprendre l'une et/ou l'autre des informations suivantes, associées les unes aux autres :
. un identifiant d'un véhicule électrique ;
. un identifiant d'un utilisateur ;
. un identifiant d'une borne de recharge ;
. une information de temps d'arrivée d'un véhicule électrique à une borne de charge ;
. une information de temps de départ estimé d'un véhicule électrique de la borne de charge ;
. une information de durée de présence estimée d'un véhicule électrique à une borne de charge ;
. une information de niveau de charge initial d'un véhicule électrique ;
. une information de niveau de charge final souhaitée pour un véhicule électrique ;
. une information de niveau de charge instantanée d'un véhicule électrique ;
. un ensemble de paramètres physiques de la batterie du véhicule comme par exemples la température ou la tension électrique au niveau de la batterie.

Le système de commande 8 peut, en outre, exploiter l'une et/ou l'autre des informations ci-dessous :
. une information sur la disponibilité de la source d'énergie telle que le réseau électrique ;
. une information relative à une ou plusieurs caractéristiques électriques de charge de chaque chargeur, telle que, par exemple, la puissance de charge en courant continu.

De plus, le système de commande 8 dispose d'une information de temps instantanée fournie par une horloge.

Les informations en question sont soit fournies par l'utilisateur, le véhicule, la borne de charge, le chargeur, la source d'énergie, soit, dans certains cas, estimées par le système de commande 8.

Le système de commande 8 comprend un processeur adapté pour déterminer, de manière répétée, une cartographie de raccordements entre les bornes de charge et les chargeurs, en fonction des informations disponibles. La cartographie de raccordements est déterminée par le processeur afin de répondre de manière optimale à une demande de charge par les véhicules électriques. La manière optimale est déterminée par une ou plusieurs règles stockées et accessibles au processeur. Ces règles sont, le cas échéant, paramétrables. Selon un exemple de réalisation, le processeur minimise une différence entre la puissance de charge nominale disponible au niveau du système de charge et la puissance de charge consommée, en prenant en compte, en terme de contraintes, la configuration du système de charge, la cartographie actuelle et une estimation de la demande en charge future.

Pour déterminer la cartographie de raccordement, le processeur peut par exemple prendre en compte la cartographie de raccordement actuelle.

Le processeur peut déterminer d'additionner les deux chargeurs 2a, 2b sur un même emplacement de charge. Dans tous les cas, si le processeur détermine d'additionner les deux chargeurs 2a, 2b sur un même emplacement de charge, il impose qu'au moins un, le cas échéant plusieurs, des chargeurs individuels 17a-17d soit déconnecté.

Le système de commande 8 est ainsi configuré pour limiter, en cas de raccordement d'un véhicule électrique à plusieurs chargeurs 2a, 2b, la puissance totale délivrée par ceux-ci au véhicule électrique à une partie seulement de la puissance totale disponible à partir de ces chargeurs. Pour cela, le système de commande 8 établit également une cartographie de raccordement des chargeurs individuels qui est contrainte par une règle selon laquelle, si le véhicule électrique est raccordé à plusieurs chargeurs, alors au moins un des chargeurs individuels d'au moins un des chargeurs doit rester déconnecté. Cette règle permet de limiter la puissance maximale susceptible de circuler dans le système de recharge. En pratique, cette limitation présente un grand intérêt, car elle permet de ne pas dimensionner l'ensemble du système de recharge de manière à ce qu'il soit capable de supporter la puissance maximale susceptible d'être délivrée par l'ensemble des chargeurs individuels. Il suffit de dimensionner le système de recharge de manière à supporter la puissance susceptible d'être fournie par le système bridé, inférieure à la puissance maximale théorique. En effet, le coût et la complexité du système augmentent de manière exponentielle en fonction de la puissance maximale à supporter. L'invention permet donc de délivrer ponctuellement à un véhicule si besoin une charge de puissance supérieure, pour une complexité additionnelle qui reste acceptable. Selon un exemple de réalisation, par exemple, seul un chargeur individuel 17 du chargeur 2b est utilisé, et additionné au chargeur 2a au niveau du véhicule électrique à charger. Dans l'exemple considéré, on peut connecter ensemble jusqu'à n_{b}-1 (inclus) chargeurs individuels 17 du chargeur 2b et les ajouter au chargeur 2a, où n_{b} est le nombre de chargeurs individuels du chargeur 2b.

Suite à l'établissement de la cartographie de raccordement, le système de commande 8 peut commander la commutation d'un ou plusieurs dispositifs de commutation 7 et/ou d'un ou plusieurs dispositifs de commutation 18, pour respecter la cartographie de raccordement déterminée.

Dans certains cas, la cartographie de raccordement déterminée est inchangée par rapport à la cartographie de raccordement précédente et, dans ce cas, le système de commande ne commande aucune commutation.

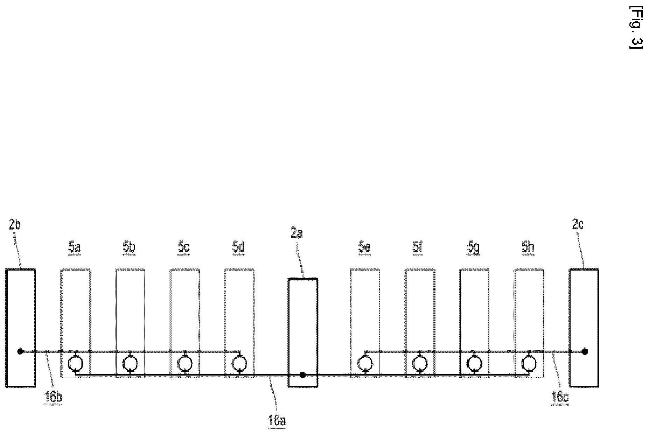

La figure 3 représente schématiquement un autre mode de réalisation. La chaine électrique 3 comprend une première ligne électrique 16a qui relie le premier chargeur 2a à chacune des bornes de charge 4. La chaine électrique 3 comprend également une deuxième ligne électrique 16b, qui relie le deuxième chargeur 2b à certaines des bornes de charge 4, et une troisième ligne électrique 16c qui relie le troisième chargeur 2c à certaines autres bornes de charge 4, comme c'est représenté sur la figure 3. Chaque borne de charge 4 est reliée au moins au deuxième chargeur 2b ou au deuxième chargeur 2c. Les chargeurs 2b et 2c sont des chargeurs identiques, présentant la même caractéristique électrique de charge. Notamment, l'architecture peut prévoir que le nombre de chargeurs dits « plus rapides » est strictement inférieur au nombre de chargeurs dits « moins rapides», comme représenté, car il est prévu que plus de véhicules aient besoin, simultanément, d'une charge moins rapide que d'une charge plus rapide. Selon un exemple de réalisation, chaque chargeur 2a, 2b, 2c comprend un unique chargeur individuel respectif 17a, 17b, 17c, de sorte que chaque chargeur 2a, 2b, 2c peut également être qualifié de chargeur individuel dans ce mode de réalisation.

Une ligne électrique 16a connecte les interfaces de connexion 13a au premier chargeur individuel 17a. Une ligne électrique 16b connecte les interfaces de connexion 13b au deuxième chargeur individuel 17b. Une ligne électrique 16c connecte les interfaces de connexion 13c au troisième chargeur individuel 17c. Les lignes électriques 16a, 16b et 16c sont comprises dans la chaine électrique 3.

Chaque commutateur individuel 14 peut alternativement prendre l'état fermé (le courant passe) ou l'état ouvert (le courant ne passe pas).

Les configurations suivantes des dispositifs de commutation 7 disposés entre les chargeurs individuels 17a et 17b sont envisageables (« F » représente l'état « fermé », et « O » représente l'état « ouvert ») :

**[Tableaux 1]**

| # | Commutateur 14a | Commutateur 14b | Configuration |
|---|---|---|---|
| XX | O | O | Ouverte, le véhicule est électriquement isolé du système |
| AA | F | O | Le véhicule est branché au chargeur individuel 17a pour une charge plus rapide |
| BB | O | F | Le véhicule est branché au chargeur individuel 17b pour une charge moins rapide |
| AB | F | F | Le véhicule est branché à la fois au chargeur individuel 17a et au chargeur individuel 17b pour une charge combinée à partir de deux chargeurs individuels |

La configuration de charge plus rapide « AA » d'un véhicule par le chargeur individuel 17a nécessite que chacune des autres bornes de charge 4 soit isolée du chargeur individuel 17a. Ainsi, les dispositifs de commutation 7 des autres bornes de charge 4 doivent être dans la configuration « XX» ou « BB ».

La configuration de charge moins rapide « BB » d'un véhicule par le chargeur individuel 17b nécessite que l'interface 13c de chacune des autres bornes de charge 4 soit déconnectée électriquement de l'interface 13b de celle-ci ; et que celle-ci soit isolée du chargeur individuel 17b. Ainsi, les dispositifs de commutation 7 des autres bornes de charge 4 doivent être dans la configuration « XX» ou « AA ».

Les configurations suivantes des dispositifs de commutation 7 disposés entre les chargeurs individuels 17a et 17c sont envisageables (« F » représente l'état « fermé », et « O » représente l'état « ouvert ») :

**[Tableaux 2]**

| # | Commutateur 14a | Commutateur 14c | Configuration |
|---|---|---|---|
| XX | O | O | Ouverte, le véhicule est électriquement isolé du système |
| AA | F | O | Le véhicule est branché au chargeur individuel 17a pour une charge plus rapide |
| CC | O | F | Le véhicule est branché au chargeur individuel 17c pour une charge moins rapide |
| AC | F | F | Le véhicule est branché à la fois au chargeur individuel 17a et au chargeur individuel 17c pour une charge combinée à partir de deux chargeurs individuels |

La configuration de charge plus rapide « AA » d'un véhicule par le chargeur individuel 17a nécessite que chacune des autres bornes de charge 4 soit isolée du chargeur individuel 17a. Ainsi, les dispositifs de commutation 7 des autres bornes de charge 4 doivent être dans la configuration « XX» ou « BB ».

La configuration de charge moins rapide « BB » d'un véhicule par le chargeur individuel 17c nécessite que l'interface 13c de chacune des autres bornes de charge 4 soit déconnectée électriquement de l'interface 13b de celle-ci ; et que celle-ci soit isolée du chargeur individuel 17c. Ainsi, les dispositifs de commutation 7 des autres bornes de charge 4 doivent être dans la configuration « XX» ou « AA ».

La mise en œuvre d'un mode de réalisation de l'invention va être décrite ci-dessous.

On peut supposer qu'initialement, aucun véhicule électrique n'est branché au système de charge 1. Des véhicules à énergie fossile peuvent être stationnés en divers emplacements mais ne sont pas branchés. Si aucun véhicule n'est branché, le système de commande 8 peut être désactivé. L'ensemble des dispositifs de commutation 7 peuvent être dans leur configuration ouverte « XX».

Un premier véhicule électrique VE1 stationne en un emplacement. Pour fixer les idées, le véhicule électrique VE1 stationne en l'emplacement 5c. L'utilisateur du véhicule électrique VE1 branche électriquement le véhicule au moyen du câble 11 de la borne 4c.

Le système de commande 8 reçoit les informations suivantes : l'identifiant de la borne de charge 4c depuis celle-ci, une information de temps d'arrivée du véhicule électrique à la borne de charge 4c depuis une horloge, une information du niveau de charge initial du véhicule électrique depuis le processeur du véhicule électrique. Par exemple, ces informations sont transmises par un système de communication sans fil entre chaque borne de charge et le système de commande 8. Le branchement de la borne de charge au véhicule électrique déclenche l'envoi d'informations depuis la borne de charge 4c vers le système de commande 8. L'horloge est par exemple centralisée au niveau du système de commande 8.

Le système de commande 8 peut également recevoir l'une et/ou l'autre des informations suivantes depuis l'utilisateur: une information de temps de départ estimé du véhicule, ou une information de durée estimée de présence de véhicule à la borne de charge, et une information de niveau de charge final souhaitée pour le véhicule électrique associé à la borne de charge.

Comme discuté ci-dessus, ces informations sont fournies par l'utilisateur via l'interface homme-machine de la borne de charge, d'un processeur portatif de l'utilisateur, et/ou d'un processeur du véhicule. Le cas échéant, à défaut de recevoir ces informations, le système de commande peut utiliser des paramètres pré-enregistrés. Selon un exemple, la durée estimée de présence est fixée à une valeur prédéterminée, par exemple deux heures (paramétrée selon l'exploitation du système, par exemple entre une heure et dix heures). Selon un exemple, l'information de niveau de charge final souhaité pour le véhicule électrique peut par exemple être fixé à « plein d'énergie » ou à « sans consigne », auquel cas le système de commande 8 chargera le véhicule au mieux selon les autres contraintes.

A un certain moment, le système de commande 8 établit la cartographie de raccordement.

Etant donné qu'un seul véhicule est à charger, le système de commande 8 établit une cartographie de raccordement par laquelle le véhicule de l'emplacement 5c est chargé par au moins un chargeur individuel disponible. En fonction des informations, le système de commande détermine si le véhicule de l'emplacement 5c est à charger au moyen d'une charge plus rapide ou d'une charge moins rapide. Dans le cas présent, le système de commande 8 détermine que le véhicule de l'emplacement 5c est à charger par une charge plus rapide, et par conséquent par le chargeur individuel 17a.

Le système de commande 8 contrôle le système de commutation de distribution 19 pour raccorder électriquement la borne de charge 4c au premier chargeur individuel 17a par l'intermédiaire de la chaîne électrique 3.

La cartographie est la suivante :

**[Tableaux 3]**

| 17b | 7a | 7b | 7c | 7d | 17a | 7e | 7f | 7g | 7h | 17c |
|---|---|---|---|---|---|---|---|---|---|---|
| | XX | XX | AA | XX | | XX | XX | XX | XX | |

On notera qu'en alternative, si le système de commande 8 détermine que le véhicule de l'emplacement 5c est à charger par une charge moins rapide, le véhicule pourrait être chargé par le chargeur individuel 17b. La cartographie de raccordement serait alors différente.

**[Tableaux 4]**

| 17b | 7a | 7b | 7c | 7d | 17a | 7e | 7f | 7g | 7h | 17c |
|---|---|---|---|---|---|---|---|---|---|---|
| | XX | XX | BB | XX | | XX | XX | XX | XX | |

Selon encore une autre alternative, si le système de commande 8 détermine que le véhicule de l'emplacement 5c est à charger par les deux chargeurs individuels 17a et 17b simultanément, la cartographie de raccordement serait alors différente :

**[Tableaux 5]**

| 17b | 7a | 7b | 7c | 17a | 7d | 7e | 7f | 7g | 7h | 17c |
|---|---|---|---|---|---|---|---|---|---|---|
| | XX | XX | AB | | XX | XX | XX | XX | XX | |

On observe que, par construction de la chaine électrique, en aucun cas le véhicule électrique n'est alimenté par l'ensemble des chargeurs individuels 17a, 17b, 17c. En effet, concernant le véhicule électrique présent pour l'exemple en l'emplacement 5c, celui-ci ne peut être relié au chargeur individuel 17c. Ceci est vrai également pour les emplacements 5a et 5b. En supposant le véhicule électrique présent en un emplacement quelconque compris entre 5d et 5h, celui-ci ne peut être relié au chargeur individuel 17b.

En pratique, cette limitation présente un grand intérêt, car elle permet de ne pas dimensionner l'ensemble du système de recharge de manière à ce qu'il soit capable de supporter la puissance maximale susceptible d'être délivrée par l'ensemble des chargeurs. Il suffit de dimensionner le système de recharge de manière à supporter la puissance susceptible d'être fournie par le système bridé, inférieure à la puissance maximale théorique. En effet, le coût et la complexité du système augmentent de manière exponentielle en fonction de la puissance maximale à supporter. L'invention permet donc de délivrer ponctuellement à un véhicule si besoin une charge de puissance supérieure, pour une complexité additionnelle qui reste acceptable.

Régulièrement, le système de commande 8 établit une cartographie de raccordement. Tant que le véhicule électrique nécessite une charge plus rapide, a priori, il n'est pas nécessaire de changer la cartographie de raccordement. Une nouvelle cartographie de raccordement peut comprendre l'établissement d'une nouvelle cartographie de raccordement des bornes de charge.

A un certain moment, en fonction des informations le système de commande détermine que le véhicule de l'emplacement 5c est à charger au moyen d'une charge moins rapide, et par conséquent par le chargeur individuel 17b. Ces informations sont par exemple :
. le niveau de la batterie,
. une information de réduction de la puissance venant du véhicule pour contrôler la température de la batterie,
. une information de réduction de la puissance venant de la source d'énergie,
. l'arrivée d'un autre véhicule prioritaire nécessitant la charge plus rapide.

Dans ce cas, le système de commande 8 contrôle le système de commutation de distribution 19 pour raccorder électriquement la borne de charge 4c au deuxième chargeur individuel 17b par l'intermédiaire de la chaîne électrique 3. Typiquement, le système de commande prend en compte qu'un chargeur individuel plus rapide ou une somme de chargeurs individuels ne doivent pas être utilisés pour assurer la suite de la charge de la batterie du véhicule électrique. Dans ce cas, si on dispose d'un chargeur individuel moins rapide, et que par ailleurs un autre véhicule électrique peut bénéficier d'une charge plus rapide, il est plus efficace de finaliser la charge du véhicule électrique avec le chargeur individuel « moins rapide ».

Qu'il soit chargé par le premier chargeur individuel 2a ou le deuxième chargeur individuel 2b, ou la somme des deux, si le véhicule électrique atteint la consigne de charge, ou si le service de charge est interrompu, le système de commande 8 est interrompu.

Dans certains cas, le véhicule VE1 est en cours de charge par le chargeur individuel 2a ou par les deux chargeurs individuels 17a et 17b quand un deuxième véhicule électrique VE2 demande à accéder au service. La demande d'accès au service pour le véhicule VE2 se fait de la même manière que pour le véhicule VE1, décrite ci-dessus.

Pour fixer les idées, dans un premier exemple de réalisation, le deuxième véhicule électrique VE2 stationne en l'emplacement 5g.

A un certain moment, le système de commande 8 établit la cartographie de raccordement.

Etant donné que seuls deux véhicules sont à charger, le système de commande 8 établit une cartographie de raccordement par laquelle au moins un chargeur individuel charge un véhicule en fonction des informations reçues et des priorités établies.

Si à son arrivée, le véhicule électrique VE2 ne bénéficie pas d'un service plus prioritaire, il n'y a pas de raison particulière de réduire la puissance de charge du premier véhicule VE1. La cartographie est alors la suivante :

**[Tableaux 6]**

| 17b | 7a | 7b | 7c | 7d | 17a | 7e | 7f | 7g | 7h | 17c |
|---|---|---|---|---|---|---|---|---|---|---|
| | XX | XX | AA ou AB | XX | | XX | XX | CC | XX | |

Régulièrement, le système de commande 8 établit une cartographie de raccordement. Tant que les véhicules électriques chargent, a priori, la cartographie de raccordement ne va pas changer.

Si, à un certain moment, le système de commande 8 détermine qu'il est plus efficace que le véhicule qui bénéficie actuellement de la charge la plus rapide soit chargé de manière moins rapide, et que l'autre véhicule soit chargé de manière plus rapide, le système de commande contrôle une commutation des dispositifs de commutation 7 en ce sens. La cartographie est alors la suivante :

**[Tableaux 7]**

| 17b | 7a | 7b | 7c | 7d | 17a | 7e | 7f | 7g | 7h | 17c |
|---|---|---|---|---|---|---|---|---|---|---|
| | XX | XX | BB | XX | | XX | XX | AA ou AC | XX | |

Ce peut être le cas notamment si le véhicule électrique disposé en l'emplacement 7c a atteint un niveau de charge important, alors qu'il reste peu de temps pour charger le véhicule disposé en l'emplacement 7g.

Si un des véhicules électriques atteint sa consigne de charge, on revient dans une configuration où un seul véhicule électrique est à charger, à savoir celui n'ayant pas atteint sa consigne.

Dans ce cas, on se retrouve dans la configuration décrite ci-dessus avec un unique véhicule à charger.

Dans certains cas, les véhicules VE1 et VE2 sont en cours de charge par l'ensemble des chargeurs individuels 17a, 17b, 17c comme présenté ci-dessus dans le tableau 7, quand un troisième véhicule électrique VE3 demande à accéder au service. La demande d'accès au service pour le véhicule VE3 se fait de la même manière que pour le véhicule VE1, décrite ci-dessus.

Pour fixer les idées, dans un premier exemple de réalisation, le troisième véhicule électrique VE3 stationne en l'emplacement 5a.

A un certain moment, le système de commande 8 établit la cartographie de raccordement.

Etant donné que seuls trois véhicules sont à charger, le système de commande 8 établit une cartographie de raccordement par laquelle chaque chargeur individuel charge un véhicule en fonction des informations reçues et des priorités établies.

La cartographie est alors la suivante :

**[Tableaux 8]**

| 17b | 7a | 7b | 7c | 7d | 17a | 7e | 7f | 7g | 7h | 17c |
|---|---|---|---|---|---|---|---|---|---|---|
| | BB | XX | AA | XX | | XX | XX | CC | XX | |

Toutefois, il est également possible que le système de commande 8 établisse une cartographie de raccordement par laquelle un véhicule est chargé par la somme de deux chargeurs individuels en fonction des informations reçues et des priorités établies. Cela implique que l'un des trois véhicules n'est alors pas chargé.

Dans certains cas, un quatrième véhicule électrique VE4 va demander l'accès au service de charge à l'emplacement 5e.

On se place par exemple dans une configuration de départ telle que présentée au tableau 8 ci-dessus, où des véhicules VE1, VE2 et VE3 à charger sont aux emplacements 5a, 5c et 5g.

Le système de charge 1 ne peut charger simultanément que trois véhicules.

A un certain moment, le système de commande 8 établit la cartographie de raccordement.

Cette cartographie de raccordement est établie de manière à optimiser la fourniture du service à l'ensemble des demandeurs.

Ce but peut être atteint en déterminant la moins mauvaise configuration instantanée.

Les critères permettant de déterminer la moins mauvaise configuration instantanée sont paramétrés dans le système de commande 8.

Le système de commande 8 détermine donc quels sont les au plus trois véhicules à charger électriquement au cours du prochain intervalle de temps. Cette détermination peut prendre en compte une information de niveau de charge instantanée des véhicules électriques demandant le service. Cette information peut être communiquée soit par le véhicule automobile, soit estimée par le système de commande 8 à partir du niveau de charge initial et du niveau de charge transmise à ce véhicule.

Cette détermination peut être réalisée par exemple par la recherche d'un minimum pour une fonction de coût déterminée ou paramétrée dans le système de commande 8. La fonction de coût vise à faire en sorte d'optimiser la réponse aux contraintes de l'ensemble des véhicules.

Par exemple, si le temps de départ estimé du véhicule VE1 est proche, et que celui-ci est loin d'être chargé à hauteur du niveau de charge au départ souhaité, que le niveau de charge souhaité par le véhicule VE4 est « libre », et que les temps de départ estimés des véhicules VE2, VE3 et VE4 sont plus lointains que celui du véhicule VE1, une cartographie de raccordement optimal peut être, pour le prochain intervalle de temps, de charger les véhicules VE1, VE2 et VE3, et de ne pas charger le véhicule VE4.

Dans ce cas, l'arrivée du véhicule VE4 ne change pas la cartographie de raccordement présentée ci-dessus dans le cas où il n'y a que trois véhicules.

Dans la poursuite de l'exemple précédent, et en supposant que le véhicule VE4 stationne en l'emplacement 5e, la cartographie de raccordement peut être déterminée comme suit :

**[Tableaux 98]**

| 17b | 7a | 7b | 7c | 7d | 17a | 7e | 7f | 7g | 7h | 17c |
|---|---|---|---|---|---|---|---|---|---|---|
| | BB | XX | AA | XX | | XX | XX | CC | XX | |

En variante, dans cet exemple, le système de contrôle peut déterminer que les véhicules à charger sont les véhicules VE1, VE2 et VE4, respectivement aux emplacements 5c, 5g et 5e, et dans ce cas, la charge du véhicule VE3 est suspendue et la cartographie de raccordement peut être déterminée comme suit :

**[Tableaux 10]**

| 17b | 7a | 7b | 7c | 7d | 17a | 7e | 7f | 7g | 7h | 17c |
|---|---|---|---|---|---|---|---|---|---|---|
| | XX | XX | BB | XX | | AA | XX | CC | XX | |

En variante, dans cet exemple, le système de contrôle peut déterminer que les véhicules à charger sont les véhicules VE2 et VE4, respectivement aux emplacements 5a et 5e, et que le véhicule VE4 est très prioritaire et nécessite une charge plus rapide. Dans ce cas, la charge des véhicules VE1 et VE3 est suspendue, celle du véhicule VE2 bascule sur le chargeur moins rapide 2b pour permettre une charge plus rapide au véhicule VE3, et le véhicule VE4 peut-être chargé par la combinaison des chargeurs individuels 17a et 17c ; la cartographie de raccordement peut être déterminée comme suit :

**[Tableaux 11]**

| 17b | 7a | 7b | 7c | 7d | 17a | 7e | 7f | 7g | 7h | 17c |
|---|---|---|---|---|---|---|---|---|---|---|
| | XX | XX | BB | XX | | AC | XX | XX | XX | |

Au cas où un des véhicules interrompait le service, la prochaine étape de détermination se ferait avec les véhicules restants. On revient alors à la configuration à trois véhicules présentée ci-dessus.

Dans le cas à quatre véhicules en cours de chargement, régulièrement, le système de commande 8 redéfinit la cartographie de chargement en fonction des informations disponibles à cet instant. En effet, la vitesse de charge peut diminuer au fur et à mesure que le pourcentage de charge de la batterie du véhicule atteint des niveaux élevés. Il serait alors plus judicieux de redonner la priorité de la charge plus rapide à un véhicule avec un faible niveau de charge. Par exemple, si trois véhicules en cours de chargement sont proches d'atteindre le niveau de charge requis, il devient de plus en plus pénalisant de ne pas charger du tout le quatrième véhicule.

A tout instant, un cinquième véhicule peut demander à accéder au service.

Le fonctionnement, décrit ci-dessus, pour quatre véhicules, peut être étendu à cinq véhicules.

Dans l'exemple présenté, le nombre d'emplacements entre les trois chargeurs individuels est de huit. Dans cet exemple, jusqu'à huit véhicules peuvent accéder simultanément au service fourni par trois chargeurs individuels.

Le nombre total d'emplacements desservis par les trois chargeurs individuels dépend de la configuration de l'installation du système.

En théorie, il n'y a pas de limite au nombre maximal d'emplacements desservis par les trois chargeurs individuels. Toutefois, pour des raisons pratiques, et pour maximiser les chances de pouvoir fournir un service efficace, le nombre d'emplacements desservis par trois chargeurs individuels peut typiquement être inférieur à 50, voire à 20, voire à 10.

Un nombre élevé d'emplacements est envisageable dans les zones de stationnement où la densité de véhicules électriques est faible, et où les intervalles de temps de charge de véhicules électriques sont très variables selon les véhicules. Ainsi, les véhicules à énergie fossile peuvent stationner sur les emplacements, qui ne sont pas réservés aux véhicules électriques.

Pour les gestions de flottes de véhicules électriques, où la densité de véhicules électriques est importante, et où tous les véhicules électriques sont à charger en même temps, on préférera un nombre réduit d'emplacements par chargeur individuel.

En variante, on peut combiner les deux modes de réalisation présentés ci-dessus. Ainsi, à la place du chargeur individuel 17b, on peut utiliser un chargeur 2b tel que présenté sur la figure 6, comprenant une pluralité de chargeurs individuels connectables en parallèle entre eux au moyen de dispositifs de commutation 18a-18d. En variante ou en combinaison, ceci s'applique également aux chargeurs individuels 17a et/ou 17c de la figure 3.

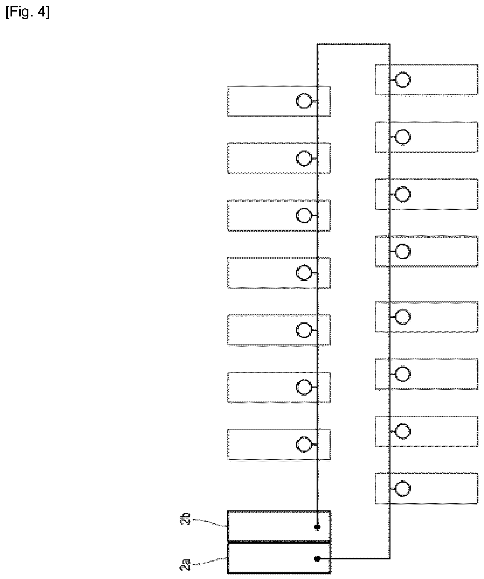

La figure 4 représente schématiquement un autre mode de réalisation de l'invention.

Ce mode de réalisation est en fait similaire à celui de la figure 1, si ce n'est que les deux chargeurs 2a, 2b sont juxtaposés, et qu'il y a plus de bornes de charge disposées sur la chaine électrique 3. En pratique, les deux chargeurs pourraient partager une même armoire.

D'autres configurations peuvent être envisagées sur la base des configurations décrites ci-dessus. En particulier, on peut prévoir d'équiper un parc de stationnement de nombreux chargeurs reliés deux à deux par des chaînes électriques, selon une grande variété de configurations.

En variante, un chargeur peut être raccordé à plus de deux chaînes électriques.

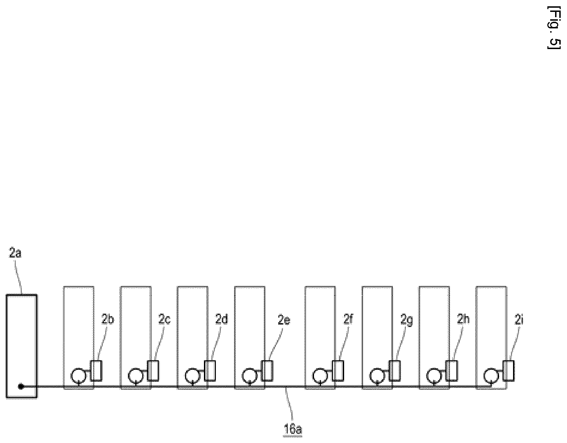

La figure 5 représente schématiquement un autre mode de réalisation de l'invention. Selon ce mode de réalisation, la chaine électrique comprend une seule ligne électrique 16a. Chaque borne de charge 4 intègre un chargeur électrique local 2b, 2c, ... présentant la deuxième caractéristique de charge électrique. Si un véhicule électrique, présent en un emplacement, est chargé électriquement, c'est au choix par le chargeur électrique local, ou par le premier chargeur électrique 2a par l'intermédiaire de la première ligne électrique 16a, ou par l'addition de ces deux chargeurs,.

Selon un mode de réalisation, on pourrait prévoir qu'au moins un des chargeurs 2a, 2b, 2c soit mobile. On fait par exemple référence aux chargeurs mobiles décrits dans le brevet US 9,592,742 ou dans la demande de brevet internationale WO 2018/140,886. De tels chargeurs mobiles peuvent être utilisés pour charger des véhicules électriques distants, stationnés en des emplacements non équipés par l'invention. Aussi, si les contraintes imposées par les véhicules électriques à charger le permettent, et si des emplacements de charge 5 sont disponibles pour qu'un chargeur puisse y stationner, le système de commande peut déterminer une cartographie de raccordement qui alimente le chargeur mobile. Le chargeur mobile peut alors se connecter électriquement à la chaîne électrique par l'intermédiaire d'une borne de charge 4.

On notera que, en variante ou en supplément, un véhicule électrique peut être utilisé en tant que source d'énergie. Dans ce cas, les chargeurs sont bidirectionnels.

Chacun des chargeurs 2 est équipé de matériel d'électronique de puissance : Convertisseur de courant, composants d'alimentation électrique, compteur d'énergie, équipement de protection (interrupteur, disjoncteur, diode, fusible, ...), et cartes de communication avec le véhicule à charger ou avec la borne de charge.

La description ci-dessus a été faite pour un standard de charge donné, par exemple le standard « Chademo ». Alternativement, cette description peut être faite pour tout autre standard de charge, par exemple « Combo CCS ».

La chaîne électrique 3 comprend plusieurs lignes électriques (de différentes tensions, permettant de passer différents niveaux de quantité de courant électrique) dont le nombre, les caractéristiques physiques, les longueurs et les sections de câble sont déterminés, selon les modes de réalisation, entre autres par la puissance du courant fourni, les distances entre les objets, les standards de connexion pour la recharge des véhicules, la communication et l'informatique nécessaires pour le bon fonctionnement du système de charge 1.

Le cas échéant, on peut prévoir que chaque borne de charge est apte à charger le véhicule électrique situé en cet emplacement selon plusieurs standards de charge distincts. Dans ce cas, il suffit d'équiper les chargeurs et les chaînes électriques pour chaque standard.

Une information additionnelle disponible au système de commande 8, et utilisée pour l'établissement de la cartographie de raccordement, est le standard de charge du véhicule.

### Références

Système de charge 1
Chargeurs 2, 2a, 2b, 2c
Chaîne électrique 3
Borne de charge 4
Emplacement de charge 5
Système de commutation 6
Dispositif de commutation 7
Système de commande 8
Support 9
Boîtier 10
Câble 11
Interface électronique 12
Interface de connexion 13a, 13b, 13c
Commutateur 14
Câblage électrique 15
Première ligne électrique 16a
Deuxième ligne électrique 16b
Troisième ligne électrique 16c
chargeur individuel 17a-d
Système de commutation de chargeur 18
Dispositif de commutation 18a-18d
Système de commutation de distribution 19
Système de connexion électrique 20

## Revendications

1. Système de charge en énergie électrique de véhicules électriques comprenant :
. au moins trois chargeurs individuels (17), chaque chargeur individuel (17) étant adapté pour fournir une énergie électrique instantanée de charge d'un véhicule électrique,
. un système de connexion (20) adapté pour relier les chargeurs individuels (17) à des emplacements de charge (5) de véhicule électrique ;
. un système de commutation (6) adapté pour alternativement raccorder ou non les emplacements de charge (5) de véhicules électriques aux chargeurs individuels (17),
le système de commutation (6) pouvant alternativement, pour chaque emplacement :
- connecter électriquement l'emplacement (5) à un premier seul chargeur individuel (17),
- connecter électriquement l'emplacement (5) à un deuxième seul chargeur individuel (17),
- déconnecter électriquement l'emplacement (5) de tout chargeur individuel (17) et de tout autre emplacement de charge (5),
- connecter électriquement l'emplacement (5) au moins à un premier chargeur individuel (17) et à un deuxième chargeur individuel (17) connectés en parallèle ; **caractérisé en ce que**
. le système de commande (8) comprend un module informatisé de réception adapté pour recevoir des informations de demande en charge électrique des véhicules électriques,
. le système de commande (8) comprend un processeur adapté pour déterminer, de manière répétée, une cartographie de raccordements entre les véhicules électriques et les chargeurs individuels (17), en fonction au moins des informations de demande en charge reçues, la cartographie de raccordement interdisant l'ensemble des chargeurs individuels (17) d'être connectés simultanément au même emplacement (5),
le système de commande (8) étant adapté pour contrôler de manière répétée le système de commutation (6) pour raccorder électriquement les emplacements de charge des véhicules électriques aux chargeurs individuels (17).

2. Système de charge selon la revendication 1, dans lequel le processeur est adapté pour déterminer la cartographie de raccordements à partir d'une et/ou plusieurs informations de demande en charge électrique choisies parmi :
- une information de temps d'arrivée d'un véhicule électrique au système de charge ;
- une information de temps de départ estimé d'un véhicule électrique du système de charge ;
- une information de durée de présence estimée d'un véhicule électrique au système de charge ;
- une information de niveau de charge initial d'un véhicule électrique ;
- une information de niveau de charge final souhaité pour un véhicule électrique ;
- une information de niveau de charge instantané d'un véhicule électrique ;
- un ensemble de paramètres physiques de l'état d'un véhicules électrique tels que la température de la batterie, sa tension électrique.

3. Système de charge selon la revendication 1 ou 2, dans lequel le processeur est adapté pour déterminer la cartographie de raccordements à partir en outre d'informations choisies parmi :
- une information de temps instantanée fournie par une horloge ;
- une information de disponibilité de la source d'énergie comme le réseau électrique.

4. Système de charge selon l'une des revendications 1 à 3, dans lequel lesdites énergies électriques présentent des caractéristiques électriques de charge différentes, et dans lequel le processeur est adapté pour déterminer la cartographie de raccordements en fonction en outre desdites caractéristiques électriques de charge.

5. Système de charge selon la revendication 4, dans lequel les caractéristiques électriques de charge des chargeurs comprennent une puissance électrique instantanée de charge en courant continu.

6. Système de charge selon l'une des revendications 1 à 5, dans lequel le processeur est adapté pour déterminer la cartographie de raccordements en minimisant une différence entre la puissance de charge nominale disponible au niveau du système de charge et la puissance de charge consommée, en prenant en compte, en terme de contraintes, la configuration du système de charge, la cartographie de raccordements actuelle et une estimation de la demande en charge future.

7. Système de charge selon l'une des revendications 1 à 6, comprenant au moins un premier et un deuxième chargeurs (2a, 2b), chaque chargeur (2a, 2b) comprenant au moins un desdits chargeurs individuels (17), et au moins un desdits chargeurs (2a, 2b) étant constitué d'une pluralité de chargeurs individuels (17) connectés entre eux en parallèle, dans lequel le système de commutation (6) comprend :
. un système de commutation de chargeur (18) adapté pour alternativement connecter les uns aux autres ou déconnecter les uns des autres lesdits chargeurs individuels (17),
. un système de commutation de distribution (19) adapté pour alternativement raccorder ou non les véhicules électriques au premier chargeur (2a) ou au deuxième chargeur (2b), ledit système de commutation de distribution (19) comprenant ledit dispositif de commutation (7),
Et dans lequel le système de commande (8) est adapté pour contrôler de manière répétée le système de commutation de distribution (19) pour raccorder électriquement un des véhicules électriques au premier chargeur (2a) et un autre des véhicules électriques au deuxième chargeur (2b) et le système de commutation de chargeur (18) pour raccorder électriquement entre eux des chargeurs individuels (17).

8. Système de charge selon l'une des revendications 1 à 7, dans lequel le système de commutation (6), notamment le système de commutation de distribution (19), est configuré pour que chaque chargeur individuel (17) soit raccordé, à tout instant donné, à au plus une borne de charge (4).

9. Système de charge selon l'une des revendications 1 à 8, dans lequel le système de commande (8) est externe à tout véhicule à charger.

10. Système de charge selon l'une des revendications 1 à 9, dans lequel au moins un des chargeurs individuels (17) est mobile, le système de commande (8) étant adapté pour contrôler de manière répétée le système de commutation (6), notamment le système de commutation de distribution (19) pour raccorder électriquement un des dispositifs électriques à un premier chargeur individuel (17) et un autre des dispositifs électriques à un deuxième chargeur individuel (17) en fonction de l'emplacement des chargeurs individuels (17).

11. Système de charge selon la revendication 10, dans lequel le chargeur individuel (17) mobile se raccorde au système de connexion (20) au niveau d'un emplacement (5).

12. Système de charge selon la revendication 10 ou 11, dans lequel le chargeur individuel (17) mobile est un véhicule électrique.

13. Procédé de charge en énergie électrique de dispositifs électriques dans lequel, disposant de :
- au moins trois chargeurs individuels (17), chaque chargeur individuel (17) étant adapté pour fournir une énergie électrique instantanée de charge d'un véhicule électrique,
. un système de connexion (20) adapté pour relier les chargeurs individuels (17) à des emplacements de charge (5) de véhicules électriques;
- un système de commutation (6) adapté pour alternativement raccorder ou non les emplacements de charge (5) de véhicules électriques aux chargeurs individuels (17),
le système de commutation (7) pouvant alternativement pour chaque emplacement :
. connecter électriquement l'emplacement (5) à un premier seul chargeur individuel (17),
. connecter électriquement l'emplacement (5) à un deuxième seul chargeur individuel (17),
. déconnecter électriquement l'emplacement (5) de tout chargeur individuel (17) et de tout autre emplacement de charge (5),
. connecter électriquement l'emplacement (5) au moins à un premier chargeur individuel (17) et à un deuxième chargeur individuel (17) connectés en parallèle ; **caractérisé en ce que**
- un module informatisé de réception du système de commande (8) reçoit des informations de demande en charge électrique des véhicules électriques ;
- un processeur du système de commande (8) détermine, de manière répétée, une cartographie de raccordements entre les véhicules électriques et les chargeurs individuels (17), en fonction au moins des informations de demande en charge électrique reçues, la cartographie de raccordement interdisant l'ensemble des chargeurs individuels (17) d'être connectés simultanément au même emplacement (5),
- le système de commande (8) contrôle de manière répétée le système de commutation (6) pour raccorder électriquement les emplacements de charge (5) des véhicules électriques aux chargeurs individuels (17).

14. Programme d'ordinateur comprenant des instructions qui, lorsque le programme est exécuté par un ordinateur, conduisent celui-ci à mettre en œuvre le procédé selon la revendication 13.
